# EUROPEAN PATENT APPLICATION

(11) **EP 2 785 028 A1**
(43) Date of publication of application: **01.10.2014**
(21) Application number: 13305421.3
(22) Date of filing: 29.03.2013
(51) Int. Cl.: H04M 3/22

(54) **Method and system for providing in real-time voice quality feedback during a communication session**

(71) Applicant: ALCATEL LUCENT, 92100 Boulogne-Billancourt (FR)
(72) Inventor: MARTIN, Antony, 91620 NOZAY (FR); PAPILLON, Serge, 91620 NOZAY (FR)
(74) Representative: 2SPL Patentanwälte PartG mbB

(57) **Abstract**

Method for informing in real-time a first part participating to an ongoing communication session about the quality perceived by a second part participating to the said communication session, said method comprising the steps of:
- Acquiring in real-time at least one quality indicator related to the said communication session at the said second part side;
- Analyzing and evaluating in real-time the quality of the said communication session perceived at the said second part side with utilizing the said quality indicator(s);
- Sending in real-time information related to the evaluated quality of the said communication session perceived at the said second part to the said first part.

## Description

### FIELD OF THE INTENTION

The present invention relates to a voice quality feedback method and system provided to users involved in a communication session to inform them in real-time about the quality perceived by the other user-sides.

### BACKGROUND OF THE INVENTION

Communication sessions either analog or digital play an important part in our daily lives. But in mobility, when performing a communication session with other users we often experience some communication issues. For instance, during a conversation call the end-users can indifferently experience voice communication issues such as blanks, partial words or partial sentences heard. Many reasons may cause these issues like limited bandwidth or/and a poor coverage in time space at one or both user-sides. This type of situation creates frequently misunderstandings between the caller and the callee because most of time the conversation is asymmetric: one of the two sides hears very well, while the other one doesn't.

Yet a solution can not be easily designed around while being efficient and not causing more congestion therefore decreasing the overall quality.

Accordingly the technical problem is to inform either one or both sides (the caller or/and the caller) that the line quality is poor, at a low cost for the bandwidth, to increase the overall conversation benefits with a better understanding.

To address such problems, one known solution by the user-sides is to try to physically move and make iterative tests until both the caller and the callee hear well each other.

Another solution generally performed by the end-users when experiencing this issue occurs is to stop the current conversation call and move to a solution consuming less bandwidth and which is not real-time channel such as SMS or email.

However in both cases this does not enable to detect as early as possible the issues and inform the remote sides, while trying to maintain and improve the conversation session overtime.

Moreover, these are standalone solutions that are not efficient at a larger scale for instance at operator side, to diagnose overtime radio coverage lacks and fix them.

An object of the present invention is to allow a better understanding between two people involved in a live communication session even though the channel quality is not evenly good on both sides.

Another object of the present invention is to monitor the communication session quality, particularly the voice conversation quality (whatever analog or digital), compare it to a configurable level of quality and provide some feedback to the both end-users.

Another object of the present invention is to add value in the live communication session through indicators instead of having a manual handling of the issue.

Another object of the present invention is to leverage the indicator at the deployment scale to improve lacks in the radio coverage.

### SUMMARY OF THE INVENTION

Various embodiments are directed to addressing the effects of one or more of the problems set forth above. The following presents a simplified summary of embodiments in order to provide a basic understanding of some aspects of the various embodiments. This summary is not an exhaustive overview of these various embodiments. It is not intended to identify key of critical elements or to delineate the scope of these various embodiments. Its sole purpose is to present some concepts in a simplified form as a prelude to the more detailed description that is discussed later.

Various embodiments relate to a method for informing in real-time a first part participating to an ongoing communication session about the quality perceived by a second part participating to the said communication session, said method comprising the steps of:
- Acquiring in real-time at least one quality indicator related to the said communication session at the said second part side;
- Analyzing and evaluating in real-time the quality of the said communication session perceived at the said second part side with utilizing the said quality indicator(s);
- Sending in real-time information related to the evaluated quality of the said communication session perceived at the said second part to the said first part.

Various embodiments further relate to a system for informing in real-time a first part participating to an ongoing communication session about the quality perceived by a second part participating to the said communication session, said system comprising the following modules:
- An acquisition module to acquire in real-time at least one quality indicator related to the said communication session at the said second part side;
- An analyzing module to analyze and evaluate in real-time the quality of the said communication session perceived at the said second part side with utilizing the said quality indicator(s);
- A sending module to send in real-time information related to the evaluated quality of the said communication session perceived at the said second part to the said first part.

While the various embodiments are susceptible to various modification and alternative forms, specific embodiments thereof have been shown by way of example in the drawings. It should be understood, however, that the description herein of specific embodiments is not intended to limit the various embodiments to the particular forms disclosed.

It may of course be appreciated that in the development of any such actual embodiments, implementation-specific decisions should be made to achieve the developer's specific goal, such as compliance with system-related and business-related constraints. It will be appreciated that such a development effort might be time consuming but may nevertheless be a routine understanding for those or ordinary skill in the art having the benefit of this disclosure.

### BRIEF DESCRIPTION OF THE DRAWINGS

The objects, advantages and other features of the present invention will become more apparent from the following disclosure and claims. The following non-restrictive description of preferred embodiments is given for the purpose of exemplification only with reference to the accompanying drawing in which
- FIG.1 is a schematic diagram illustrating an embodiment of the present invention;
- FIG.2 is a schematic diagram illustrating the modules of a monitoring system and their interactions with one part during a communication session for deploying various embodiments.

### DETAILED DESCRIPTION OF ILLUSTRATIVE EMBODIMENTS

The following description applies to an ongoing communication session between two parts.

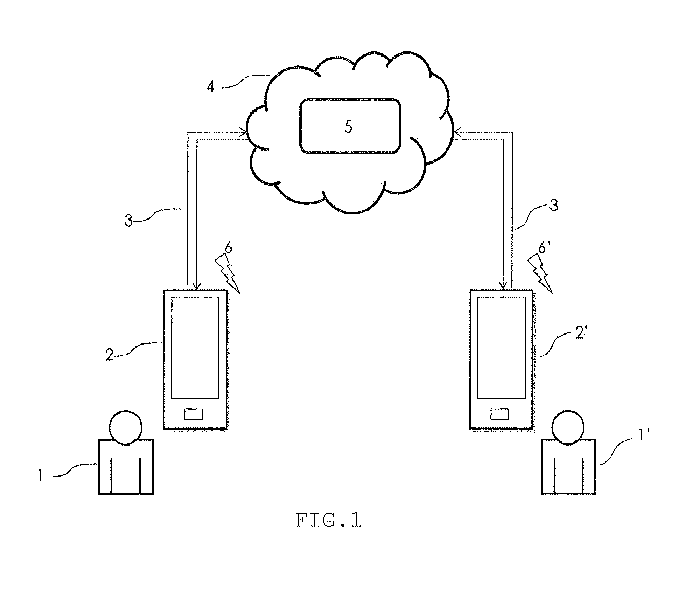

With reference to Figure **1**, two users **1** and **1'** equipped with different terminals **2** and **2'** are performing a same ongoing communication session **3** through a communication network **4**. The system **5** performs a monitoring function of the said ongoing conversation: it analyses and evaluates the level of the ongoing communication session quality and provides in real-time a feedback to terminals **2** and **2**' about the quality of the communication session perceived by the other part with the help of perceptible warnings **6** and **6**'. For instance if the communication session quality perceived by the terminal **2**' (respectively **2**) is judged to be below a threshold of quality configured in **5**, the terminal **2** (respectively **2**') is notified about this issue by receiving a perceptible warning **6** (respectively **6**'). During a conversation call the perceptible warnings **6** and **6'** inform the user **1** and **1**' of the poor conversation quality 3 perceived by the other part. For instance, if considering the user **1** as the caller and user **1**' as the callee, if the caller **1**' does not hear well the speaker **1** caused by a lake of bandwidth, the speaker **1** is notified by perceptible warning such as vibrations or lighting on his terminal **2** at the rhythm of his own speech.

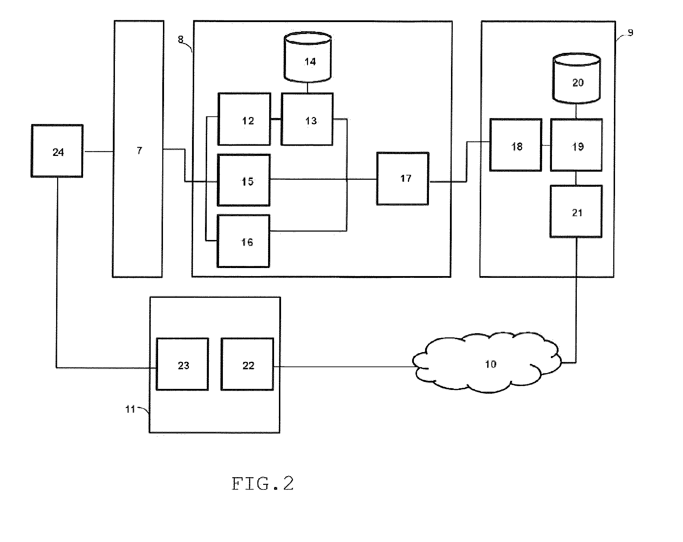

Next considering Figure 2, there is shown the different modules of the said monitoring system **5** and their interactions with the modules of one user part during an ongoing communication session.

In a one embodiment, two parts (e.g. two users) are participating to the same ongoing communication session with their respective communication terminals. It is also assumed that the conversation is asymmetric for one of the part: one side gets less bandwidth than the other side and has accordingly a worse communication session quality than the other part.

The module **7** performs a real-time acquisition of at least one quality indicator related to the communication session perceived by one user side and transmits the said quality indicator(s) to module **8.** Module **8** is in charge of analyzing in real-time the said quality indicator(s) by comparing it/them to preconfigured threshold and of returning an evaluation of the communication session quality. Then the evaluation result is communicated to module **9,** depending of the quality result this module transforms the indicator(s) acquired by **7** into quality information to be sent in real-time through a network **10** to the other user side **11**. In order to avoid a decreasing of the overall quality of the communication session, module **9** sends the said quality information with using network **10** with the least bandwidth consumption. The said information quality messages are received at the other user side **11** and triggers via the sub-module **22** perceptible warning indicators to inform **11** of the perceived communication session quality an the other side.

To illustrate various embodiments of the present invention, an example wherein said communication is a conversation call (whatever analog or digital) between two users is now considered. It is assumed that at least one or the both parts is in a situation in which the bandwidth is limited. One part may be indifferently the caller, the callee, the speaker or the receiver. Accordingly the fallavuing description applies indifferently to both parts.

As a first step voice quality indicators are acquired in real-time by the module **7** at one part side and then transmitted to the analyzing and evaluating module **8**. Module **8** performs during the conversation an analysis of the indicators linked to the conversation quality on each part, each direction, and each channel. For instance indicators such as quality of sentences, voice loudness or radio coverage are considered.

In an embodiment several sub-modules in **8** can be used to perform this step:
Module **12** translates in real-time voice of the speaker into text using state of the art speech-to-text techniques. The said text output of **12** is transmitted to module **13** which evaluates the quality of sentences by comparing them to thresholds and rules stored in the database **14.**

A non-exhaustive list of rules stored in **14** concerns the evaluation of:
- The number of consecutive words that are self-understandable;
- Trunk words;
- Repetition of a given word/sequence of letters;
- Grammatical correctness: for instance presence of subject followed by verbs articles and names.

Module **15** evaluates in real-time voice loudness of the corresponding quality indicator acquired. This enables to detect the caller and/or callee speaking louder which is a good indicator, meaning the remote part does not hear well. Another module **16** evaluates the radio coverage related to the acquired indicator.

Module **17** regroups and aggregates all the analyzed indicators of modules **8** (the information returned by **13, 15**, and **16**) and evaluates the quality of the voice conversation perceived by the corresponding part.

It is to be noted that modules **12** to **17** may be integrated either on the user-side either in a remote platform with no radio constraints.

The evaluation result of the module **17** is then transmitted to module **9**. If module **17** judges the conversation quality as being "bad" compared to a pre-configured threshold, module **9** transforms in real-time the voice of the current speaker into information related to the evaluated quality, for example through signaling and/or data messages. The said signaling/data messages are then sent by module **9** through the networks **10** with lowest bandwidth consumption, to the other part **11,** more specifically to the triggering module **22**. The module **22** uses the said signaling/data messages received (related to the evaluated quality) to trigger perceptible warning indicators to part **11**.

In one embodiment sub-modules **18**, **19, 20, 21** are optionally used by module **9** to perform the following operations:
To have a rich feedback about the way his voice is perceived on the remote side module **18** transforms spectrally the speaker voice, this step permits to get a frequential transcript of the speaker voice. For instance, Fourier or wavelet transformations may be performed.

Then the module **19** computes the said signaling/data messages to send by modulating the output of module **18**. The modulation to be used is chosen among predefined patterns stored in the database **20**. For instance traffic congestion of the channels and available bandwidth are taken into account to choose the appropriate modulation. The said signaling/data messages are computed per time window, to provide an almost real-time feedback. Then the sending module **21** selects the available network **10** (voice only/data only) with the lowest bandwidth consumption and send the said signaling/data messages to the sub-module **22** of the other part **11**. Module **22** uses the said signaling/data messages to trigger at least one perceptible warning.

The form and number of the perceptible warning indicators triggered by module **22** are conditioned by the available bandwidth of each part. For instance the user who has the most available bandwidth is warned by several perceptible warning such as vibration at the rhythm of his voice, or visual notifications such as lighting at the same rate. The user who has the lowest available bandwidth receives "basic" notifications which are the same as described above but with a more limited number due to the lack of bandwidth.

In another embodiment with considering a system identical to the one previously described, if one part **11** experiences a low quality voice conversation, this part **11** can send spontaneously via the module **23** a voice perception indicator. This indicator is used as a first level of module **24** to trigger the analysis of the module **8**. The sending of an indicator is based on a voluntary action of the part: for instance when a user judges the received voice quality as being "bad", he sends an indicator via the module **23** with the help of a SMS or an embedded application to mobile **24** which triggers the analysis. It is to be note that an end-user can send via module **23** other indicators than the quality perceived. For example a user can send an indicator that mentions "listen to me": if the module **15** detects loudness on the same side, it means that the receiver is trying to speak but the speaker speaks too loudly and does not hear the receiver. So the speaker may be informed or warned by **22**.

In another embodiment, when the quality of conversation is judged to be "poor" by module **17**, the perceptible warnings may still be triggered by module **22**, but in addition to that the speaker that is not well heard receives a notification and initializes local speech-to-text translation at module **12** and sends the text to the other part.

Advantageously, the above-described system allows a better understanding between two parts involved in the same ongoing communication session even if the channel quality is not good on both sides.

## Claims

1. Method for informing in real-time a first part participating to an ongoing communication session about the quality perceived by a second part participating to the said ongoing communication session, said method comprising the steps of:
- acquiring in real-time at least one quality indicator related to the said communication session at the said second part side;
- analyzing and evaluating in real-time the quality of the said communication session perceived at the said second part side on the basis of the said quality indicator;
- sending in real-time information related to the evaluated quality of the said communication session perceived at the said second part to the said first part.

2. Method according to claim 1 wherein the analyzing step comprises the comparison of at least one quality indicator related to the said communication session to a predetermined threshold.

3. Method according to any of the preceding claims wherein the said information related to the evaluated quality of the said communication session perceived at the said second part triggers in real-time at least one perceptible warning at the said first part.

4. Method according to claim 3 wherein the said perceptible warning is a vibration or lighting at a frequency related to the evaluation result of the said quality indicator.

5. Method according to any of the preceding claims further comprising a triggering step of the said acquiring and analyzing steps of the said quality indicators, via sending a perception indicator of the said ongoing communication session.

6. Method according to any of the preceding claims wherein the said communication session is a conversation call.

7. Method according to any of the preceding claims, wherein the said quality indicators to acquire and analyze include voice, voice loudness and radio coverage.

8. Method according to claim 7 wherein the said evaluating step applied to the said voice quality indicator is performed by translating in real-time voice into text and analyzing the quality of sentences by comparing it to rules stored in a database, the said rules concerning the evaluation of:
- The number of consecutive words that are self-understandable;
- Trunk words;
- Repetition of a given word/sequence of letters;
- Grammatical correctness: for instance presence of subject followed by verbs articles and names.

9. Method according to claim 8 comprising a further step including initialization of a local speech-to-text translation and sending the text to the other part.

10. System for informing in real-time a first part participating to an ongoing communication session about the quality perceived by a second part participating to the said ongoing communication session, said system comprising the following modules:
- an acquisition module (7) to acquire in real-time at least one quality indicator related to the said communication session at the said second part side;
- an analyzing module (8) to analyze and evaluate in real-time the quality of the said communication session perceived at the said second part side with utilizing the said quality indicator;
- a sending module (9) to send in real-time information related to the evaluated quality of the said communication session perceived at the said second part to the said first part.

11. System according to the preceding claim wherein the analyzing module (8) comprises a comparison sub-module linked to a database to compare at least one said quality indicator related to the said communication session to a predetermined threshold and an evaluation module to aggregate and evaluate the result.

12. System according to claims 10 and 11 comprising a warning module to trigger in real-time at least one perceptible warning at the said first part, related to the evaluated quality of the said communication session perceived at the said second part.

13. System according to any of the claims 10 to 12 further comprising a sending modules to send a perception indicator of the said ongoing communication session, a triggering module to receive the said perception indicator and trigger the said acquisition and analyzing modules.

14. System according to any of the claims 10-13 wherein the analyzing module includes:
- a voice loudness evaluating sub-module to evaluate in real-time the voice loudness;
- a radio coverage evaluating sub-module to evaluate in real-time radio coverage;
- a translating sub-module to translate in real-time voice into text;
- a sentence evaluating sub-module linked to a storing rules database to evaluate the quality of sentences of the said translated text and comparing it to the said database rules;
- an evaluating voice quality module to aggregate and evaluate the results of the said sub-modules.

## Amended claims

### Amended claims in accordance with Rule 137(2) EPC.

**1.** Method for informing in real-time a first part (1; 2) participating to an ongoing communication session about the quality perceived by a second part (1'; 2') participating to the said ongoing communication session, said method comprising the steps of:
- acquiring in real-time at least one voice quality indicator related to the first part's voice perceived at the second part side (1'; 2') of said communication session;
- analyzing and evaluating in real-time the quality of the said communication session perceived at the said second part (1'; 2') side on the basis of the said voice quality indicator;
- sending in real-time information related to the evaluated quality of the said communication session perceived at the said second part (1'; 2') to the said first part (1; 2).

**2.** Method according to claim 1, wherein the analyzing step comprises the comparison of at least one quality indicator related to the said communication session to a predetermined threshold.

**3.** Method according to any of the preceding claims, wherein the said information related to the evaluated quality of the said communication session perceived at the said second part triggers in real-time at least one perceptible warning at the said first part.

**4.** Method according to claim 3, wherein the said perceptible warning is a vibration or lighting at a frequency related to the evaluation result of the said quality indicator.

**5.** Method according to any of the preceding claims, further comprising a triggering step of the said acquiring and analyzing steps of the said quality indicators, via sending a perception indicator of the said ongoing communication session.

**6.** Method according to any of the preceding claims, wherein the said communication session is a conversation call.

**7.** Method according to any of the preceding claims, wherein the said quality indicators to acquire and analyze include voice, voice loudness and radio coverage.

**8.** Method according to claim 7, wherein the said evaluating step applied to the said voice quality indicator is performed by translating in real-time voice into text and analyzing the quality of sentences by comparing it to rules stored in a database, the said rules concerning the evaluation of:
- The number of consecutive words that are self-understandable;
- Trunk words;
- Repetition of a given word/sequence of letters;
- Grammatical correctness: for instance presence of subject followed by verbs articles and names.

**9.** Method according to claim 8, comprising a further step including initialization of a local speech-to-text translation and sending the text to the other part.

**10.** System (5) for informing in real-time a first part (1; 2) participating to an ongoing communication session about the quality perceived by a second part (1'; 2') participating to the said ongoing communication session, said system comprising the following modules:
- an acquisition module (7) to acquire in real-time at least one voice quality indicator related to the first part's voice perceived at the second part side of the said communication session;
- an analyzing module (8) to analyze and evaluate in real-time the quality of the said communication session perceived at the said second part side with utilizing the said voice quality indicator;
- a sending module (9) to send in real-time information related to the evaluated quality of the said communication session perceived at the said second part (1'; 2') to said first part (1 ; 2).

**11.** System (5) according to the preceding claim, wherein the analyzing module (8) comprises a comparison sub-module linked to a database to compare at least one said quality indicator related to the said communication session to a predetermined threshold and an evaluation module to aggregate and evaluate the result.

**12.** System (5) according to claims 10 and 11, comprising a warning module to trigger in real-time at least one perceptible warning at the said first part, related to the evaluated quality of the said communication session perceived at the said second part.

**13.** System (5) according to any of the claims 10 to 12, further comprising a sending module to send a perception indicator of the said ongoing communication session, a triggering module to receive the said perception indicator and trigger the said acquisition and analyzing modules.

**14.** System (5) according to any of the claims 10-13, wherein the analyzing module includes:
- a voice loudness evaluating sub-module to evaluate in real-time the voice loudness;
- a radio coverage evaluating sub-module to evaluate in real-time radio coverage;
- a translating sub-module to translate in real-time voice into text;
- a sentence evaluating sub-module linked to a storing rules database to evaluate the quality of sentences of the said translated text and comparing it to the said database rules;
- an evaluating voice quality module to aggregate and evaluate the results of the said sub-modules.
